# Europäisches Patentamt

# European Patent Office

# Office européen des brevets

(11) Veröffentlichungsnummer: **0 290 607**
A1

## (12) EUROPÄISCHE PATENTANMELDUNG

Veröffentlicht nach Art. 158 Abs. 3 EPÜ

(21) Anmeldenummer: 87900986.8

(22) Anmeldetag: 28.11.86

Daten der zugrundeliegenden internationalen Anmeldung:

(86) Internationale Anmeldenummer:
PCT/SU86/00123

(87) Internationale Veröffentlichungsnummer:
WO88/03880 (02.06.88 88/12)

(51) Int. Cl.³: **B 60 G 5/00**
**B 60 G 11/04**

(43) Veröffentlichungstag der Anmeldung:
**17.11.88 Patentblatt 88/46**

(84) Benannte Vertragsstaaten:
**DE FR GB IT SE**

(71) Anmelder: **KIEVSKY INZHENERNO-STROITELNY INSTITUT**
**Vozdukhoflotsky pr., 31**
**Kiev 252037(SU)**

(72) Erfinder: **AZAMATOV, Ramil Abdreevich**
**Novy gorod, 17/03-98**
**Brezhnev, 423823(SU)**

(72) Erfinder: **ZAMITTER, Mikhail Naumovich**
**ul. Aviatsii, 2/32-4-18**
**Kiev, 252043(SU)**

(72) Erfinder: **ZEMA, Evgeny Mikhailovich**
**ul. Chekhova, 1b-1 Dnepropetrovskaya obl.**
**Sinelnikovo, 323110(SU)**

(72) Erfinder: **NEDOREZOV, Vladimir Afanasievich**
**ul. Chekhova, 1-2 Dnepropetrovskaya obl.**
**Sinelnikovo, 323110(SU)**

(72) Erfinder: **OBLOVATSKY, Anatoly Konstantinovich**
**ul. Mira, 33-10 Dnepropetrovskaya obl.**
**Sinelnikovo, 323110(SU)**

(74) Vertreter: **Nix, Frank Arnold, Dr.**
**Kröckelbergstrasse 15**
**D-6200 Wiesbaden(DE)**

(54) **ELASTISCHES AUFHÄNGESYSTEM FÜR FAHRZEUGRÄDER.**

(57) Die elastische Radaufhängung eines einen Rahmen mit mindestens einer Achse besitzenden Fahrzeuges enthält einen Satz (3) von zwischen dem Rahmen (1) und der Achse (2) des Fahrzeuges angeordneten und mit denselben mechanisch verbundenen Federn. Entlang der Ausdehnung der im Federsatz (3) zusammengefaßten Federn liegt eine bügelförmige Plattenfeder (4). Mittlere Abschnitte (5,6) jeweils des Federsatzes (3) und der bügelförmigen Plattenfeder (4) sind mittels einer Befestigungsbaugruppe (7) miteinander mechanisch verbunden.

FIG. 1

0290607

ELASTISCHE RADAUFHÄNGUNG EINES FAHRZEUGES

Technisches Gebiet

Die vorliegende Erfindung bezieht sich auf Einrichtungen zur Dämpfung von dynamischen Belastungen, genauer auf elastische Radaufhängungen von Fahrzeugen.

Zugrundeliegender Stand der Technik

Gegenwärtig nimmt angesichts der erweiterten Einsatzmöglichkeiten von Transportmitteln, Vergrößerung ihrer Anzahl und Erweiterung ihrer Funktionsmöglichkeiten die Notwendigkeit zu, die Fahrgeschwindigkeit eines beladenen bzw. unbeladenen Transportmittels zu erhöhen sowie die Nutzlast bei gleichzeitiger Senkung des Kraftstoffverbrauchs zu vergrößern.

Es ist eine elastische Radaufhängung von Fahrzeugen bekannt, die einen Rahmen mit zumindest einer Achse besitzen (siehe z.B. I.M. Jurkovsky und V.A. Tolpygin "Lastkraftwagen KamAZ", Moskau, Verlag "DOSAAF", 1975, S. 227), welche Aufhängung einen Satz von Federn enthält, die zwischen dem Rahmen und der Fahrzeugachse liegen und mit diesen mechanisch verbunden sind.

Bei dieser Aufhängung führt jedoch die Anwendung einer großen Anzahl von Federn zu einer linearen elastischen Aufhängungscharakteristik, was die Laufeigenschaften der Aufhängung bei einigen Fahrweisen beeinträchtigt.

Darüber hinaus enthält der Federsatz in dieser Aufhängung eine solche Anzahl von Federn, die die Aufnahme der gesamten vertikalen Belastung ermöglicht, was die Metallintensität der Aufhängung erhöht.

Ferner ist für diese Aufhängung kennzeichnend, daß die Herstellung eines Federsatzes mit recht großer Federzahl den Herstellungsaufwand vergrößert und den Zusammenbau erschwert.

Offenbarung der Erfindung

Der vorliegenden Erfindung liegt die Aufgabe zugrunde, eine elastische Radaufhängung eines Fahrzeuges zu schaffen, die solche zusätzliche Elemente hätte, welche eine im voraus vorgegebene nichtlineare elastische Aufhängungscharakteristik zu erzielen, die Metallintensität und den Herstellungsaufwand zu verringern sowie den Zusammenbau der Aufhängung zu vereinfachen erlauben würden.

Dies ist dadurch erreicht, daß die elastische Radaufhängung eines einen Rahmen mit mindestens einer Achse besitzenden Fahrzeuges, die einen Satz von Federn enthält, welche zwischen dem Rahmen und der Achse des Fahrzeugs angeordnet und mit denselben mechanisch verbunden sind, erfindungsgemäß zusätzlich eine bügelförmige Plattenfeder, die entlang der Ausdehnung der im Federsatz zusammengefaßten Federn liegt, sowie eine Befestigungsbaugruppe enthält, mit deren Hilfe die Federn des Federsatzes und die bügelförmige Plattenfeder über deren mittlere Abschnitte miteinander mechanisch verbunden sind.

Zweckmäßigerweise ist die Befestigungsbaugruppe in der elastischen Radaufhängung eines Fahrzeuges mit der Achse, in dem Fall aber, wo das Fahrzeug mindestens zwei Achsen besitzt, mit dem Fahrzeugrahmen mechanisch verbunden, wobei die Randabschnitte der bügelförmigen Plattenfeder mit dem Rahmen bzw. mit den jeweiligen Achsen des Fahrzeuges mechanisch verbunden sind.

Es empfiehlt sich, daß die elastische Radaufhängung eines Fahrzeuges zusätzlich zwei Laschen enthält, bei jeder von denen das eine Ende mit dem Ende des entsprechenden Randabschnittes der bügelförmigen Plattenfeder, das andere Ende aber mit dem Rahmen bzw. mit den jeweiligen Achsen des Fahrzeuges gelenkig verbunden ist.

Zweckdienlich enthält die Befestigungsbaugruppe in der elastischen Radaufhängung eines Fahrzeuges übereinander angeordnete und starr zusammengehaltene drei Fixierelemente, bei denen die Länge eines jeden von ihnen kleiner als die Länge des mittleren Abschnittes der bügelförmigen Plattenfeder ist, wobei an der Innenfläche eines jeden der Rand-Fixierelemente je eine Längsnut eingearbeitet ist, bei welchen die Breite einer von ihnen mit der Dicke der bügelförmigen Plattenfeder und die Breite der anderen mit der Breite des Federsatzes übereinstimmt, während an den beiden Oberflächen des mittleren Fixierelementes je eine Längsnut eingearbeitet ist, bei denen die Breite einer von

- 3 -

ihnen mit der Dicke der bügelförmigen Plattenfeder, die Breite der anderen Längsnut aber mit der Breite des Federsatzes übereinstimmt, wobei eine jede von ihnen gegenüber der Nut eines jeweiligen Rand-Fixierelementes liegt.

Die vorliegende Erfindung gewährleistet die Erzielung einer im voraus vorgegebenen nichtlinearen elastischen Charakteristik der Aufhängung, was die Laufeigenschaften des Fahrzeuges verbessert.

Diese Erfindung gestattet es ferner, die Dämpfung von dynamischen Belastungen zu gewährleisten, die auf das Fahrzeug übertragen werden, was zur Erweiterung der Funktionsmöglichkeiten der elastischen Radaufhängung des Fahrzeuges führt.

Darüber hinaus erlaubt es die vorliegende Erfindung, die Anzahl von Federn im Federsatz erheblich zu verringern, was die Metallintensität der elastischen Radaufhängung des Fahrzeuges vermindert.

Schließlich gestattet es diese Erfindung, den Herstellungsaufwand der elastischen Radaufhängung eines Fahrzeuges beträchtlich zu vermindern.

Kurze Beschreibung der Zeichnungen

Im folgenden wird die Erfindung durch Beschreibung konkreter Ausführungsbeispiele derselben unter Bezugnahme auf beiliegende Zeichnungen näher erläutert; in diesen zeigt:

Fig. 1 die Gesamtansicht der elastischen Radaufhängung eines Fahrzeuges, gemäß der Erfindung;

Fig. 2 den Querschnitt nach Linie II-II von Fig. 1;

Fig. 3 die Gesamtansicht der elastischen Radaufhängung eines Fahrzeuges nach Fig. 1 bei statischer Belastung, gemäß der Erfindung;

Fig. 4 die Gesamtansicht der elastischen Radaufhängung eines Fahrzeuges nach Fig. 1 bei maximaler dynamischer Belastung, gemäß der Erfindung;

Fig. 5 die Gesamtansicht der elastischen Radaufhängung eines Fahrzeuges mit zwei Achsen, gemäß der Erfindung;

Fig. 6 den Querschnitt nach Linie VI-VI von Fig. 5.

Beste Ausführungsform der Erfindung

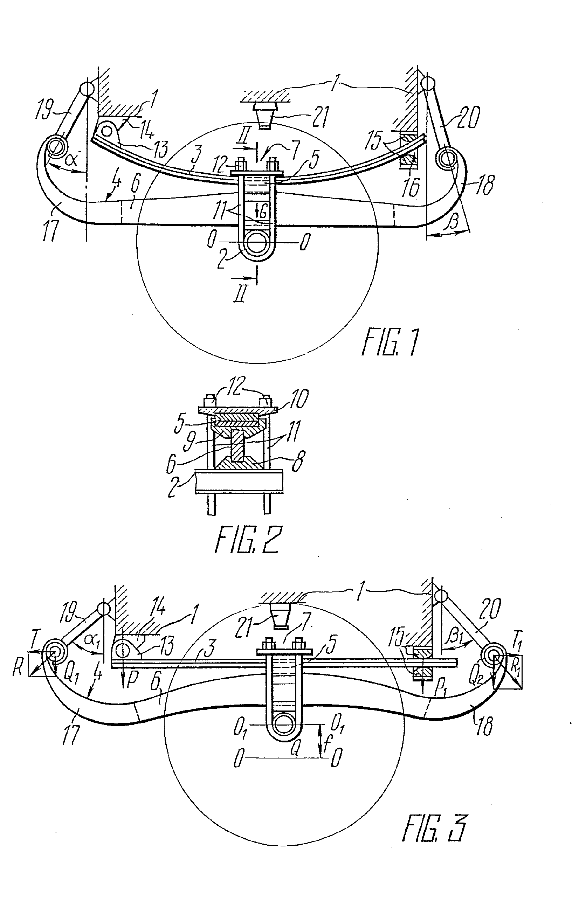

Die elastische Radaufhängung eines Fahrzeuges, das einen Rahmen 1 (Fig. 1) mit einer Achse 2 besitzt, enthält einen Federsatz (aus zwei Federn) und eine bügelförmige Plattenfeder 4, bei denen ihre jeweiligen mittleren Abschnitte 5 und 6 mittels einer Befestigungsbaugruppe 7 miteinander starr verbunden sind. Die Befestigungsbaugruppe 7 (Fig. 1, 2) enthält übereinander angeordnete Fixierelemente 8, 9, 10, deren maximale Ausdehnung in der Längsrichtung kleiner als die Länge des mittleren Abschnittes 6 der Feder 4 ist. An den zueinander gekehrten Oberflächen der Fixierelemente 8 und 9 sind einander gegenüber Längsnuten eingearbeitet, deren Breite mit der Dicke der Feder 4 übereinstimmt und in denen der mittlere Teil des Abschnittes 6 der Feder 4 liegt. An den zueinander gekehrten Oberflächen der Elemente 9 und 10 sind einander gegenüber Längsnuten eingearbeitet, deren Breite mit der Breite des Federsatzes 3 übereinstimmt und in denen der Abschnitt 5 des Federsatzes 3 liegt. Das Element 8 befindet sich auf der Achse 2. Die Elemente 8, 9 und 10 sind zusammen mit dem Federsatz 3 und der Feder 4 durch Bügel 11 zusammengehalten, welche mittels Muttern 12 fest angezogen sind. An dem einen Ende des Federsatzes 3 (Fig. 1) ist eine Öse 13 befestigt, die an einem mit dem Rahmen 1 starr verbundenen Kragstück 14 angelenkt ist. Das andere Ende des Federsatzes 3 liegt zwischen profilierten Auflagen 15 eines Kragstückes 16, das mit dem Rahmen 1 starr verbunden ist. Mit den Enden der Randabschnitte 17, 18 der Feder 4 sind die einen Enden jeweiliger Laschen 19 und 20 gelenkig verbunden. Die anderen Enden der Laschen 19 und 20 sind an dem Rahmen 1 angelenkt. Die Laschen 19 und 20 sind im freien Zustand der elastischen Radaufhängung um jeweilige Winkel $\alpha$ und $\beta$ von der Vertikalen abgelenkt. Am Rahmen 1 ist über der Befestigungsbaugruppe 7 ein Begrenzungspuffer 21 befestigt. Das Rad des Fahrzeuges ist durch eine strichpunktierte Linie angedeutet. Im freien Zustand der elastischen Radaufhängung befindet sich die mit der Querachse der Achse 2 zusammenfallende Radachse in Höhe der Linie O-O.

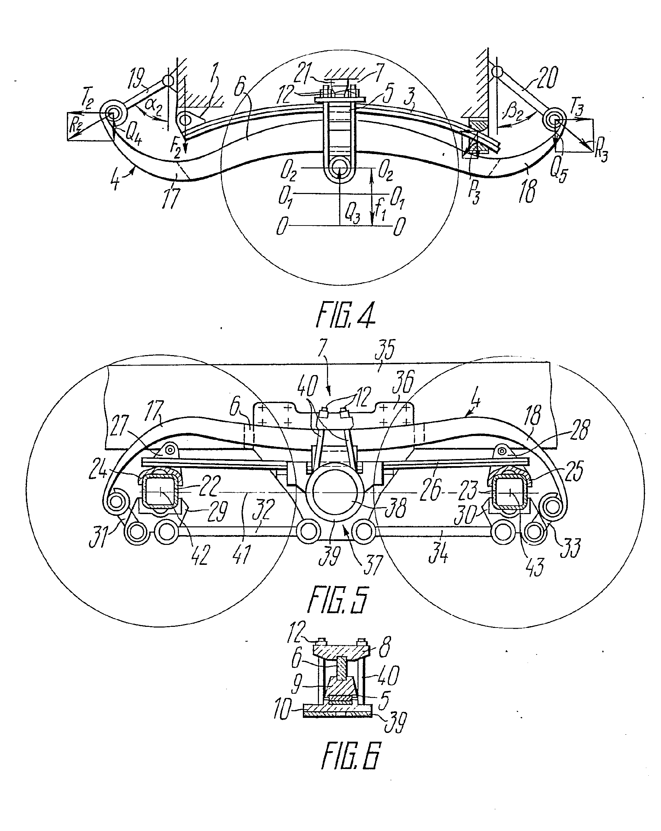

In Fig. 3 ist die elastische Radaufhängung des Fahrzeuges nach Fig. 1 bei statischer Belastung dargestellt, bei der die Laschen 19 und 20 um jeweilige Winkel $\alpha_1$ und $\beta_1$ abgelenkt sind. Die Radachse (Querachse der Achse 2) liegt in Höhe der Linie $O_1 - O_1$, die in einem Abstand f von der Linie O-O verläuft, welcher durch den Betrag der statischen Durchbiegung des Federsatzes 3 und der Feder 4 bedingt ist.

In Fig. 4 ist die elastische Radaufhängung des Fahrzeuges nach Fig. 1 bei dynamischer Belastung dargestellt, bei der die Laschen 19 und 20 um jeweilige Winkel $\alpha_2$ und $\beta_2$ abgelenkt sind. Die Radachse (Querachse der Achse 2) liegt in Höhe einer Linie $O_2 - O_2$, die in einem Abstand $f_1$ von der Linie O - O verläuft, welcher durch den Betrag der dynamischen Durchbiegung des Federsatzes 3 und der Feder 4 bedingt ist.

Gemäß einer weiteren Ausführungsform der elastischen Radaufhängung eines Fahrzeuges, das zwei aufeinanderfolgend angeordnete Achsen 22 und 23 (Fig. 5) mit jeweiligen Auflagen 24 und 25 besitzt, stützen sich die Enden eines Federsatzes 26 auf den Auflagen 24 und 25 ab. An die Auflagen 24 und 25 sind jeweilige Begrenzungsanschläge 27 und 28 angeschlossen. An den Achsen 22 und 23 sind jeweilige Kragstücke 29 und 30 befestigt. Am Kragstück 29 sind die einen Enden einer Lasche 31 und eines Hebels 32 angelenkt. Am Kragstück 30 sind die einen Enden einer Lasche 33 und eines Hebels 34 angelenkt. Die anderen Enden der Laschen 31 und 33 sind mit den Enden der jeweiligen Randabschnitte 17, 18 der Feder 4 gelenkig verbunden. An einem Rahmen 35 ist ein Kragstück 36 befestigt, an dem die anderen Enden der Hebel 32 und 34 angelenkt sind. An einem Kragstück 36 ist ein Schwinghebel 37 mit seiner Achse 38 befestigt. Die Achse 38 ist von einem Schuh 39 umfaßt. Die Feder 4 und der Federsatz 3 sind ähnlich der vorbeschriebenen Radaufhängung nach Fig. 1 zusammen mit dem Schuh 39 des Schwinghebels 37 durch die Befestigungsbaugruppe 7 (Fig. 5, 6) miteinander verbunden. Die Befestigungsbaugruppe 7 ist ähnlich der im vorstehenden beschriebenen ausgeführt, aber dabei stützt sich das Element 10 auf dem Schuh 39 ab und ist zusammen mit dem Federsatz 3, dem Element 9, der Feder 4 und dem Element 8 (alles übereinander angeordnet) durch Stiftschrauben 40 zusammengehalten, die mittels Muttern 12 fest angezogen sind. Im statischen Zustand des Fahrzeuges ist die geometrische Verbindungslinie 41 der Mittelpunkte 42, 43 der jeweiligen Achsen 22 und 23 zur Bewegungsebene des Fahrzeuges auf einer ebenen Straße parallel.

Die elastische Radaufhängung eines Fahrzeuges nach Fig. 1, 2, 3, 4 arbeitet folgenderweise.

Im unbelasteten Zustand ist die Radaufhängung (ohne Berücksichtigung von beim Festziehen der Muttern 12 entstehenden Kräften) nur der Einwirkung der Schwerkräfte seitens des Federsatzes 3, der bügelförmigen Plattenfeder 4, der Befestigungsbaugruppe 7, der Achse 2 unterworfen. Die Ablenkungswinkel $\alpha$ und ß der Laschen 19 und 20 sind dabei minimal und kommen größenmäßig einander nahe. Ein geringer Unterschied dieser Winkel $\alpha$ und ß sowie der Längen der Laschen 19 und 20 ist durch die Besonderheiten der Aufhängungskinematik bedingt, die damit zusammenhängen, daß der Federsatz 3 sich beim Betrieb nicht nur in bezug auf die Achse der Öse 13 drehen, sondern auch in der Längsrichtung relativ zu Kragstück 16 verschieben kann.

Im statischen Zustand (Fig. 3), d. h. unter der Wirkung des auf die Radaufhängung entfallenden Teiles des Gesamtgewichtes des ausgerüsteten Fahrzeuges mit Besatzung, werden die Federn des Federsatzes 3 so gut wie gerade gestreckt und liegen praktisch horizontal, während die bügelförmige Plattenfeder verformt wird. Dabei wird die Durchbiegung (der Hub) der Aufhängung gleich f, und die Ablenkungswinkel $\alpha$ und ß der Laschen 19 und 20 nehmen bis auf $\alpha_1$ und $ß_1$ zu.

Die Fahrdammreaktion Q wird durch die Schwerkraft G (Fig. 1), die Reaktionen P und $P_1$ (Fig. 3) der Federn des Federsatzes 3 und die vertikalen Komponenten $Q_1$ und $Q_2$ der Auflagerreaktionen R und $R_1$ der Feder 4 aufgewogen, wobei die horizontalen Komponenten der Reaktionen R und $R_1$ jeweils T und $T_1$ betragen.

Bei dynamischer, d.h. maximaler Durchbiegung $f_1$ (Fig.4)

biegen sich der Federsatz 3 und die bügelförmige Plattenfeder 4 zum Rahmen 1 des Fahrzeuges hin so lange durch, bis das Element 10 der Befestigungsbaugruppe 7 zur Anlage am Begrenzungspuffer 21 gekommen ist. Die Ablenkungswinkel $\alpha_2$ und $\beta_2$ der Laschen 19, 20 erreichen dabei einen Maximalwert. Dementsprechend ändern sich auch die vorerwähnten vertikalen Belastungen $Q$, $Q_1$, $Q_2$ zu $Q_3$, $Q_4$, $Q_5$ sowie $P$ und $P_1$ zu $P_2$ und $P_3$, und gleichfalls auch die horizontalen Komponenten $T$ und $T_1$ der Auflagerreaktionen $R$ und $R_1$ beim Abstützen der Feder 4 an der Aufhängung zu $T_2$ und $T_3$ bei Auflagereaktionen $R_2$ und $R_3$, wobei sie ihre Maximalwerte erreichen.

Eine Besonderheit der Funktion der Aufhängung besteht hierbei darin, daß beim Ändern der Gesamtbelastung an der Aufhängung die Auflagerreaktionen $R_2$, $R_3$ nicht nur ihren Betrag ändern, sondern auch ihre Richtung wechseln.

Daher ändern sich die Spannungen in den Querschnitten $Q$ der bügelförmigen Plattenfeder 4 je nach der Belastung $Q$ nichtlinear, und folglich ändert sich auch die Steifigkeit der Aufhängung nichtlinear, was eben die Nichtlinearität ihrer elastischen Charakteristik bedingt.

Die elastische Radaufhängung eines Fahrzeuges mit zwei Achsen 22 und 23 (Fig. 5) funktioniert bei der Bewegung desselben auf einer ebenen Straße ähnlich wie vorstehend beschrieben.

Bei der Bewegung eines derartigen Fahrzeuges auf einer unebenen Straße bzw. beim Überwinden lokaler Erhebungen bzw. Vertiefungen der Straße realisiert die erfindungsgemäße Radaufhängung die ihr innewohnende Eigenschaft, einen Schwingausgleich zu gewährleisten, d.h. den Neigungswinkel der geometrischen Linie 41 zu ändern, was eine ständige Berührung der Räder mit der Straßenoberfläche garantiert. Hierbei kann sich beispielsweise das mit der Achse 22 verbundene Rad um eine bestimmte Höhe gegenüber der Anfangsstellung heben, welche in Fig. 5 veranschaulicht ist, während das mit der Achse 23 verbundene Rad sich um denselben Betrag senken kann. Die dabei an den Rädern angreifenden Belastungen gleichen sich aus und bleiben prak-

- 8 -

tisch gleich, d.h., die Räder werden in bezug auf die Achse 38 des Schwinghebels 37 ausbalanciert. Dabei werden der Federsatz 26 und die Feder 4 gemeinsam mit der Baugruppe 7 und dem Schuh 39 des Schwinghebels 37 als ein einheitliches Ganzes in bezug auf die Achse 38 des Schwinghebels 37 um denselben Winkel geschwenkt, um den die Linie 41 von ihrer statischen Lage abgewichen ist. Gleichzeitig werden die Hebel 32 und 34 um größenmäßig gleiche, dem Vorzeichen nach aber verschiedene Winkel verschwenkt. Die beschriebene Lage wird so lange beibehalten, bis die Linie 41 in die statische Lage zurückgekehrt ist. Dabei werden die Zug- und Bremskräfte von den Hebeln 32 und 34 sowie von der Feder 4 aufgenommen und über das Kragstück 36 auf den Rahmen 35 übertragen. Die Kräfte, die auf die Räder in der zu Bewegungsebene des Fahrzeuges senkrechten Richtung wirken, werden von den Begrenzungsanschlägen 27 und 28 aus auf die Seitenfläche des Federsatzes 26 übertragen und über die Befestigungseinheit 7, den Schuh 39 und das Kragstück 36 ebenfalls vom Rahmen 35 aufgenommen.

Erfindungsgemäß ist die Länge eines jeden von den Fixierelementen 8 (Fig. 2, 6), 9 und 10 der Baugruppe 7 kleiner als die Länge des mittleren Abschnittes 6 (Fig. 1, 4, 5) der Feder 4. Dadurch wird gewährleistet, daß die vorhandene Baugruppe 7 die Durchbiegung der Feder 4 unter der Wirkung der an ihr angreifenden vertikalen Belastung relativ wenig beeinflußt.

Die vorliegende Erfindung gestattet es, den Zusammenbau der Radaufhängung zu vereinfachen.

Darüber hinaus verringert diese Erfindung die Metallintensität der Radaufhängung und verbessert hierdurch die Laufeigenschaften des Fahrzeuges im ganzen.

Gewerbliche Verwertbarkeit

Die vorliegende Erfindung kann für beliebige Radfahrzeuge, beispielsweise für Kraftwagen, Anhänger angewendet werden, die einer Dämpfung dynamischer Belastungen bedürfen.

- 9 -

PATENTANSPRÜCHE

1. Elastische Radaufhängung eines einen Rahmen mit mindestens einer Achse besitzenden Fahrzeuges, die einen Satz von Federn enthält, die zwischen dem Rahmen und der Achse des Fahrzeuges angeordnet und mit denselben mechanisch verbunden sind, dadurch g e k e n n z e i c h n e t, daß sie zusätzlich eine bügelförmige Plattenfeder (4), die entlang der Ausdehnung der in einem Federsatz (3) zusammengefaßten Federn liegt, sowie eine Befestigungsbaugruppe (7) enthält, mit deren Hilfe die Federn des Federsatzes (3) und die bügelförmige Plattenfeder (4) über ihre mittleren Abschnitte (5, 6) miteinander mechanisch verbunden sind.

2. Aufhängung nach Anspruch 1, dadurch g e k e n n z e i c h n e t, daß die Befestigungsbaugruppe (7) mit der Achse (2) bzw. in dem Fall, wo das Fahrzeug mindestens zwei Achsen (22 und 23) besitzt, mit dem Fahrzeugrahmen (35) mechanisch verbunden ist, wobei Randabschnitte (17, 18) der bügelförmigen Plattenfeder (4) mit dem Rahmen (35) bzw. mit jeweiligen Achsen (22 und 23) des Fahrzeuges mechanisch verbunden sind.

3. Aufhängung nach Anspruch 2, dadurch g e k e n n z e i c h n e t, daß sie zusätzlich zwei Laschen (19, 20) enthält, bei jeder von denen das eine Ende mit dem Ende des zugehörigen Randabschnittes (17, 18) der bügelförmigen Plattenfeder (4), das andere Ende aber mit dem Rahmen (35)bzw. mit den jeweiligen Achsen (22 und 23) des Fahrzeuges gelenkig verbunden ist.

4. Aufhängung nach einem beliebigen von den Ansprüchen 1 - 3, dadurch g e k e n n z e i c h n e t, daß die Befestigungsbaugruppe (7) übereinander angeordnete und miteinander starr zusammengehaltene drei Fixierelemente (8, 9, 10) enthält, bei denen die Länge eines jeden von ihnen kleiner als die Länge des mittleren Abschnittes (6) der bügelförmigen Plattenfeder (4) ist, wobei an der Innenfläche eines jeden von den Rand-Fixierelementen (8, 10) je eine Längsnut eingearbeitet ist, bei welchen die Breite einer von ihnen mit der Dicke der bügelförmigen Plattenfeder(4) und die Breite der anderen mit der Breite des Federsatzes (3) übereinstimmt, während an den beiden Oberflächen des mittleren Fixierelementes (9) je eine Längsnut eingearbeitet ist, bei welchen die Breite einer von ihnen mit der Dicke der bügelförmigen Plattenfeder (4), die Breite der anderen Längsnut aber mit der Breite des Federsatzes (3) übereinstimmt, wobei jede von ihnen gegenüber der Nut eines jeweiligen Rand-Fixierelementes (8 und 10) liegt.

FIG. 1

FIG. 2

FIG. 3

0290607

FIG. 4

FIG. 5

FIG. 6

# INTERNATIONAL SEARCH REPORT

0290607

International Application No PCT/SU 86/00123

## I. CLASSIFICATION OF SUBJECT MATTER (if several classification symbols apply, indicate all) [6]

According to International Patent Classification (IPC) or to both National Classification and IPC

IPC$^4$: B 60 G 5/00, 11/04

## II. FIELDS SEARCHED

| Minimum Documentation Searched [7] | |
|---|---|
| Classification System | Classification Symbols |
| IPC$^4$ | B 60 G 5/00-5/06, B 60 G 11/02-11/04 |

Documentation Searched other than Minimum Documentation
to the Extent that such Documents are Included in the Fields Searched [8]

## III. DOCUMENTS CONSIDERED TO BE RELEVANT [9]

| Category [*] | Citation of Document, [11] with indication, where appropriate, of the relevant passages [12] | Relevant to Claim No. [13] |
|---|---|---|
| A | US, A, 3883125, (NHK Spring Co., Ltd.), 13 May 1975 (13.05.75), see figures 3,4 | 1 |
| A | US, A, 2304780, (Otto H. de Frieds), 15 December 1942 (15.12.42), see figures 1,2 | 1,3,4 |
| A | US, A, 4570970, (George Burfiend), 18 February 1986 (18.02.86), see figure 1 | 1,2 |
| A | DE, B1, 1199145, (Petrus August Vestin), 19 August 1965 (19.08.65), see figures 2,3 | 1 |

* Special categories of cited documents: [10]

"A" document defining the general state of the art which is not considered to be of particular relevance

"E" earlier document but published on or after the international filing date

"L" document which may throw doubts on priority claim(s) or which is cited to establish the publication date of another citation or other special reason (as specified)

"O" document referring to an oral disclosure, use, exhibition or other means

"P" document published prior to the international filing date but later than the priority date claimed

"T" later document published after the international filing date or priority date and not in conflict with the application but cited to understand the principle or theory underlying the invention

"X" document of particular relevance; the claimed invention cannot be considered novel or cannot be considered to involve an inventive step

"Y" document of particular relevance; the claimed invention cannot be considered to involve an inventive step when the document is combined with one or more other such documents, such combination being obvious to a person skilled in the art.

"&" document member of the same patent family

## IV. CERTIFICATION

| Date of the Actual Completion of the International Search | Date of Mailing of this International Search Report |
|---|---|
| 27 July 1987 (27.07.87) | 17 August 1987 (17.08.87) |
| International Searching Authority | Signature of Authorized Officer |
| ISA/SU | |

Form PCT/ISA/210 (second sheet) (January 1985)